Europäisches Patentamt

European Patent Office

Office européen des brevets

(11) Publication number: **0 153 981**
**B1**

(12) EUROPEAN PATENT SPECIFICATION

(45) Date of publication of patent specification: **17.05.89**

(21) Application number: **84107635.9**

(22) Date of filing: **02.07.84**

(51) Int. Cl.⁴: **B 29 D 30/56**

54 Apparatus for sealing a tyre retreading envelope.

(30) Priority: **13.02.84 US 579437**

(43) Date of publication of application:
**11.09.85 Bulletin 85/37**

(45) Publication of the grant of the patent:
**17.05.89 Bulletin 89/20**

(84) Designated Contracting States:
**AT BE CH DE FR GB IT LI NL SE**

(56) References cited:
**FR-A-2 319 483**
**US-A-3 793 116**

(73) Proprietor: **Oliver Rubber Company**
**1200 65th Street**
**Oakland California 94608 (US)**

(72) Inventor: **King, Michael John**
**4477 Barberry Court**
**Concord California 94521 (US)**

(74) Representative: **Howden, Christopher Andrew et al**
**FORRESTER & BOEHMERT Widenmayerstrasse 4/I**
**D-8000 München 22 (DE)**

Courier Press, Leamington Spa, England.

## Description

The invention relates to an apparatus for sealing a tyre retreading envelope, for use in vulcanizing a pre-cured pre-moulded tyre tread to the carcass of a tyre in a tyre retreading operation.

In tyre retreading utilizing a premoulded, precured tread portion, a buffed tyre carcass, a layer of uncured rubber compound, and the premoulded rubber tread portion are assembled and placed into a flexible envelope which encases all, or at least a substantial portion, of the carcass and the precured tread portion. When in position, the interior of the envelope is substantially evacuated, and is also subjected to a positive external pressure to hold the tread portion firmly in place to facilitate bonding to the tyre carcass. Such a procedure, and apparatus for use therein, is shown, for example, in US—A—3,779,830, which also discloses inflation of the tyre carcass during tread replacement.

Such a flexible envelope must be placed about the tyre in sealed relationship. However, this has been found to be cumbersome, time-consuming and unreliable in prior art procedures and apparatus. Once encased in an envelope, the assembled tyre carcass and preformed tread portion are placed into a heated chamber or autoclave for vulcanization of the tread to the tyre carcass. An example of an apparatus for retreading a tyre and for sealing the envelope is shown in US—A—3,886,028.

One approach to the problem of sealing a tyre envelope to a tyre to be retreaded is shown in US—A—4,274,897.

FR—A—2319483 discloses an apparatus according to the preamble of claim 1 for retreading pneumatic tyres which include a rigid ring adapted to engage the bead of a tyre carcass and which includes a first annular portion for engagement with the radially inwardly directed peripheral surface of the tyre carcass and an adjoining annular portion for engagement with the adjoining outer surface of the tyre wall, so that the ring, in effect, corresponds in form to part of a wheel rim for the respective tyre, with said first annular portion corresponding to the bead shoulder of such a wheel. Three cam-operated hooks carried by the ring are provided for engagement with the interior of the tyre. The arrangement of FR—A—2319483 however, because it utilises a ring which is modelled on the corresponding part of a corresponding vehicle wheel, presents the difficulty that unless the ring is made undersize, which is undesirable for accuracy, it is possible to encounter the same difficulty in fitting a tyre carcass to the ring as is commonly encountered in fitting a corresponding tyre to a corresponding wheel, namely the difficulty of drawing the bead fully onto the bead shoulder.

Furthermore, in FR—A—2319483, the cam operated hooks are movable substantially only axially so that some difficulty may be encountered in drawing the tyre bead over the clamping portions of the hooks before attempting to seat the tyre bead on the bead shoulder of the ring.

It is an object of the invention to provide apparatus for sealing a tyre retreading envelope and which avoids the above noted disadvantages in a simple manner.

According to the present invention, there is provided an apparatus for sealing a tyre retreading envelope, for use in vulcanising a premoulded, precured tread portion to a tyre carcass in a tyre retreading operation, which apparatus comprises a rigid ring adapted to fit against a bead of the tyre carcass with the interposition of said envelope, to hold the envelope interposed between the ring and the tyre carcass: and clamping means secured to the ring for clamping the ring tightly against the tyre bead with the interposition of said envelope to seal the envelope with respect to the tyre bead, characterised in that said ring is adapted to engage, with the interposition of said envelope, the outwardly facing surface of the tyre bead but not to engage the edge or surface portion of said tyre bead which lies closest to the rotational axis of the tyre, the ring having at least three individual position centering pins extending axially inwardly from the ring, at respective spaced apart positions around the ring to engage the edge or surface portion of said tyre bead which lies closest to the rotational axis of the tyre and thereby to centre the ring on the tyre carcass, and that said clamping means comprises a plurality of clamps mounted at circumferentially spaced locations on said ring, each of said clamps including a clamping arm movable between a position in which it lies radially inwardly of said pins to allow the ring to be fitted to a tyre and a clamping position in which it extends radially outwardly of said pins for engagement with the inner surface of the bead of a tyre, fitted to the ring and of which bead the outer surface is engaged by said ring, for clamping said bead and a skirt of a said envelope between the ring and a clamping part of said clamping arm, thereby to press said skirt of said envelope tightly and continuously against the bead to form an annular seal against passage of gases.

Preferably, each said clamping arm is a pivoted arm with a bead-engaging projection positioned to engage a side of the bead opposite to the side of the bead against which the ring is engaged, and over-centre pivoted handle means for forcing and locking the bead-engaging projection against the bead to clamp the bead tightly between the ring and the projection when the handle is swung in one direction.

In order that the invention may be more readily understood, and so that further features thereof may be appreciated, an apparatus embodying the invention will now be described, by way of example, with reference to the accompanying drawings, in which:

Figure 1 is a perspective view showing a tyre carcass and a premoulded tread portion encased in a retreading envelope, with an apparatus of the invention engaged to seal the envelope against the tyre carcass,

Figure 2 illustrates a part of a rigid ring of an apparatus of the invention as seen from the inner side,

Figure 3 is an enlarged sectional view showing the manner in which the apparatus of the invention engages a tyre carcass, with the envelope sandwiched between a rigid ring and the tyre carcass,

Figure 4 is a sectional view showing the tyre carcass and a precured tread portion encased in an envelope, with a sealing apparatus of the invention engaged adjacent the bead on respective sides of the tyre; and

Figure 5 is a sectional elevation showing an envelope-encased tyre and the sealing apparatus of the invention, inside a tyre vulcanising autoclave.

Referring to the drawings, a tyre retreading assembly, generally indicated 10, comprises a retreading envelope 11, of conventional configuration, covering a tyre carcass 12 on which is positioned a premoulded tread portion 13, to be secured to the carcass 12 by vulcanisation of an uncured rubber compound 14 sandwiched between the carcass and the tread portion. The envelope 11 is pressed into sealing engagement against each of the beads of the carcass by a sealing apparatus 17 of the invention. The apparatus 17 comprises a pair of rigid circular rings 18, preferably of metal, with a series of clamps 19 for clamping onto the bead 16 to engage the envelope 11 tightly between a ring 18 and the bead. The rigid rings 18 may be formed of aluminium or, more preferably may be of cold rolled steel, in the manner of a tyre rim.

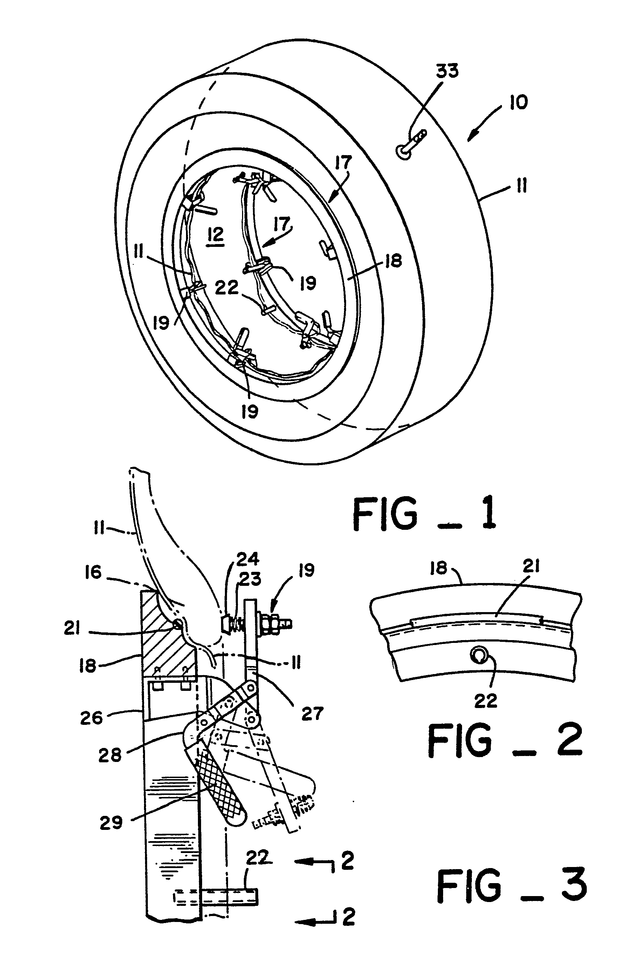

As best shown in Figures 2, 3 and 4, each rigid ring 18 may have an annular resilient member or gasket 21, which may be of elastomeric material, for resiliently pressing the envelope 11 against the bead, the gasket 21 being seated in the surface of the ring which engages the tyre/ envelope combination. The provision of such a gasket enables the apparatus to accommodate rough spots, worn areas or other irregularities in the bead, without any break in the seal between the envelope and the bead. However, with many tyres the seal will be adequate without this gasket member 21.

Referring to Figures 1 and 2, a series of locating pins 22 are desirably provided on each rigid ring 18 for centring the rings coaxially on a tyre carcass. The pins 22, of which three are sufficient on each ring, are positioned to engage the radially inner edge of the tyre bead 16 to centre the rings 18.

The clamps 19 are over-centre type clamps, as manufactured, for example, by De-Sta-Co of Birmingham, Michigan, under Series No. 317-s. Each clamp 19 includes a clamping arm 27 pivoted at one end to a bracket portion 26 secured to the ring 18 and carrying at its other end a bead engaging projection or member 24 which may be of resilient material. Each clamping arm 27 may have a stiff compression spring 23 that is positioned to bear against the member 24. The spring 23 provides a degree of adjustability to the clamps and helps each clamp to accommodate a range of thickness of tyre beads and any variations in bead thickness. The arm 27 is pivotally connected with a further arm 28. Pivotal arms 27 and 28 operate in a well known manner to clamp and lock the bead engaging member 24 onto the bead 16 when the tyre assembly is to be subjected to a vulcanising process. A handle 29 is included on the arm 28, for manual operation of the clamp. The bold lines in Figure 3 show the clamp in a locked position whilst the dashed lines indicate the unlocked, relaxed position of the clamp. It will be noted that in the locked position, the arm 27 extends radially outwardly of the pins 22, for engagement, via member 24, with the inner surface of the tyre bead, and that in the unlocked position shown in Figure 3, the arm 27 lies radially inwardly of the pins 22, whereby the ring can readily be fitted to a tyre with the arms 27 in this position.

As shown in Figure 3, the ring 18 has a sloped surface, for engagement with the outer side of the tyre bead and which sloped surface includes a plurality of concentric serrations. Accordingly, the tyre and the envelope are urged towards said serrations when the clamping arms 27 are moved towards their clamping position.

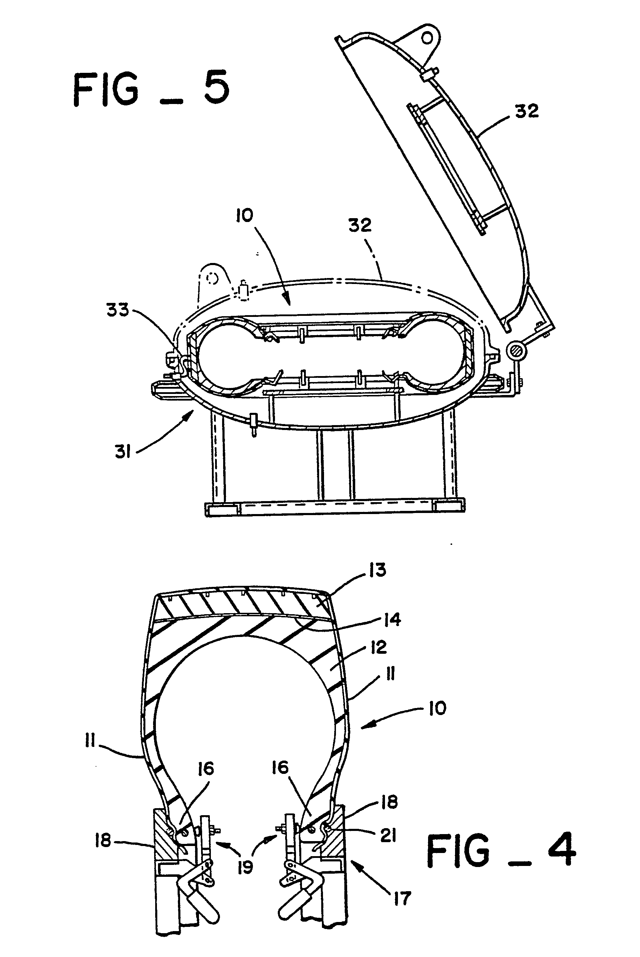

Figure 5 shows the tyre retreading assembly 10 in a single-tyre vulcanising autoclave 31 of typical construction with an openable top 32 which may be closed, as shown in broken lines, to encase the retreading assembly 10 during application of a specified heat and pressure prior to vulcanisation, the space between the tyre and the envelope 11 within the sealing apparatus 17 is evacuated through a valve nozzle 33 in the envelope. The sealing apparatus of the invention prevents the influx of air or other gases in the evacuated region of the envelope. Pressurised steam or hot air is applied to the interior space of the autoclave, applying pressure and heat to the outside of the envelope and against an inside surface of the tyre carcass. As is conventional, the vulcanisation may be performed in a multiple-tyre chamber if desired.

The apparatus of the invention improves the efficiency and reliability of the tyre retreading process by providing a reliable and easy to use device for sealing the retreading envelope against the beads of the tyre carcass.

**Claims**

1. An apparatus for sealing a tyre retreading envelope, for use in vulcanising a premoulded, precured tread portion to a tyre carcass in a tyre retreading operation, which apparatus comprises a rigid ring adapted to fit against a bead of the tyre carcass with the interposition of said envelope, to hold the envelope interposed between the ring and the tyre carcass: and clamping means secured to the ring for clamping the ring tightly against the tyre bead with the interposition of said envelope to seal the envelope with respect to the tyre bead, characterised in that said ring (18) is adapted to engage, with the interposition of said envelope, the outwardly facing surface of the tyre bead but not to engage the edge or surface portion of said tyre bead which lies closest to the rotational axis of the tyre, the ring (18) having at least three individual position centering pins (22) extending axially inwardly from the ring, at respective spaced apart positions around the ring to engage the edge or surface portion of said tyre bead which lies closest to the rotational axis of the tyre and thereby to centre the ring on the tyre carcass, and that said clamping means comprises a plurality of clamps (19) mounted at circumferentially spaced locations on said ring, each of said clamps (19) including a clamping arm (27) movable between a position in which it lies radially inwardly of said pins (22) to allow the ring to be fitted to a tyre and a clamping position in which it extends radially outwardly of said pins (22) for engagement with the inner surface of the bead of a tyre, fitted to the ring and of which bead the outer surface is engaged by said ring, for clamping said bead and a skirt of a said envelope between the ring and a clamping part (24) of said clamping arm, thereby to press said skirt of said envelope tightly and continuously against the bead to form an annular seal against passage of gases.

2. An apparatus according to claim 1, wherein each said clamping arm is a pivoted arm with a bead-engaging projection (24) positioned to engage a side of the bead opposite to the side of the bead against which the ring is engaged, and over-centre pivoted handle means (28, 29) for forcing and locking the bead-engaging projection (24) against the bead to clamp the bead tightly between the ring and the projection when the handle (28, 29) is swung in one direction.

3. An apparatus according to claim 2, including spring means (23) for yieldably urging the projection (24) against the bead.

4. Apparatus according to any of claims 1 to 3, wherein said ring (18) has a sloped surface, for engagement with the outer side of a said tyre bead and which sloped surface includes a plurality of concentric serrations, whereby the tyre and the envelope is urged toward said concentric serrations when said clamping arms (27) are moved toward said clamping positions.

5. An apparatus according to any one of claims 1 to 4, wherein the rigid ring (18) further comprises an elastomeric annular gasket (21) seated in the surface of the ring in a position to engage the envelope, opposite to the bead.

**Patentansprüche**

1. Vorrichtung zum Abdichten einer Hülle für die Runderneuerung von Reifen, zur Verwendung beim Vulkanisieren eines vorgeformten, vorgehärteten Laufflächenabschnitts auf eine Karkasse in einem Prozeß zum Runderneuern von Reifen, wobei die Vorrichtung einen starren Ring, der so ausgelegt ist, daß er bei Zwischenlage besagter Hülle an einem Wulst der Karkasse anliegt, um die zwischen dem Ring und der Karkasse liegende Hülle zu halten, und Klemmittel umfaßt, die an dem Ring befestigt sind, um den Ring bei Zwischenlage besagter Hülle fest gegen den Reifenwulst zu klemmen, um die Hülle in Bezug auf den Reifenwulst abzudichten, dadurch gekennzeichnet, daß besagter Ring (18) so ausgelegt ist, daß er bei Zwischenlage besagter Hülle mit der nach außen gerichteten Oberfläche des Reifenwulstes in Eingriff kommt, aber nicht mit dem Rand- oder Oberflächenabschnitt besagten Reifenwulstes, der am dichtesten an der Drehachse des Reifens liegt, wobei der Ring (18) wenigstens drei einzelne Lagezentrierstifte (22), die sich vom Ring axial nach innen erstrecken, an entsprechend auseinanderliegenden Stellen um den Ring herum aufweist, um mit dem Rand- oder Oberflächenabschnitt besagten Reifenwulstes, der am dichtesten an der Drehachse des Reifens liegt, in Eingriff zu kommen und dadurch den Ring auf der Karkasse zu zentrieren, und daß besagte Klemmittel mehrere Klemmen (19) umfassen, die an im Umfangsrichtung voneinander entfernten Stellen auf besagtem Ring angebracht sind, wobei jede der besagten Klemmen (19) einen Klemmarm (27) einschließt, der zwischen einer Stellung, in der er radial nach innen von besagten Stiften (22) liegt, um es zu ermöglichen, daß der Ring auf einen Reifen gepaßt werden kann und einer Klemmstellung, in der er sich zum Eingriff mit der inneren Oberfläche des Wulstes eines Reifens, der auf den Ring gepaßt ist und wobei die äußere Oberfläche dieses Wulstes mit besagtem Ring in Eingriff steht, radial nach außen von besagten Stiften (22) erstreckt zum Festklemmen von besagtem Wulst und einem Rand einer besagten Hülle zwischen dem Ring und einem Klemmteil (24) von besagtem Klemmarm bewegbar ist, wodurch besagter Rand besagter Hülle fest und gleichmäßig gegen den Wulst gedrückt wird, um eine ringförmige Abdichtung gegen das Durchströmen von Gasen zu bilden.

2. Vorrichtung nach Anspruch 1, dadurch gekennzeichnet, daß jeder besagte Klemmarm ein drehbar gelagerter Arm ist mit einem mit dem Wulst in Eingriff kommenden Vorsprung (24), der so angeordnet ist, daß er mit einer Seite des Wulstes, die derjenigen Seite des Wulstes, mit der der Ring in Eingriff kommt, gegenüberliegt, in Eingriff kommt, und ein endlagengesperrtes, drehbar gelagertes Griffteil (28, 29) zum Andrücken und Verriegeln des mit dem Wulst in Eingriff kommenden Vorsprungs (24) gegen den Wulst, um den Wulst fest zwischen den Ring und den Vorsprung zu klemmen, wenn der Griff (28, 29) in eine Richtung geschwenkt ist.

3. Vorrichtung nach Anspruch 2, gekennzeichnet durch ein Federteil (23) zum federnden Andrücken des Vorsprungs (24) gegen den Wulst.

4. Vorrichtung nach einem der Ansprüche 1 bis 3, dadurch gekennzeichnet, daß besagter Ring (18) zum Eingriff mit der Außenseite eines besagten Reifenwulstes eine abgeschrägte Oberfläche aufweist und daß die abgeschrägte Oberfläche mehrere konzentrische Sägezahneinschnitte aufweist, wodurch der Reifen und die Hülle gegen besagte konzentrische Sägezahneinschnitte gepreßt werden, wenn besagte Klemmarme (27) in besagte Klemmstellungen gebracht sind.

5. Vorrichtung nach einem der Ansprüche 1 bis 4, dadurch gekennzeichnet, daß der starre Ring (18) weiterhin eine elastomere Ringdichtung (21) umfaßt, die in der Oberfläche des Rings gegenüber dem Wulst in einer Stellung sitzt, in der sie mit der Hülle in Eingriff kommt.

**Revendications**

1. Dispositif pour rendre étanche une enveloppe de rechapage de pneumatiques destiné à l'utilisation dans la vulcanisation d'une portion de chape prémoulée, précuite sur une carcasse de pneu dans une opération de rechapage de pneumatiques, lequel dispositif comprend un anneau rigide apte à être ajusté contre le talon de la carcasse du pneumatique en intercalant l'enveloppe, pour la maintenir en sandwich entre l'anneau et la carcasse de pneu: et des moyens de serrage fixés sur l'anneau pour serrer ce dernier fermement contre le talon du pneumatique en intercalant l'enveloppe pour la rendre étanche vis-à-vis du talon de pneu, caractérisé en ce que l'anneau (18) est adapté à s'engager ou coopérer, en intercalant l'enveloppe, avec la surface faisant face extérieurement du talon de pneu, mais non pour coopérer avec le bord ou la portion de surface de l'enveloppe de pneu qui se situe le plus près de l'axe de rotation du pneu, l'anneau (18) comportant au moins trois goupilles de centrage de position individuelle (22) s'étendant axialement vers l'intérieur à partir de l'anneau, à des positions respectives espacées entre elles autour de l'anneau pour coopérer avec le bord ou la portion de surface du talon de pneu qui se situe le plus près de l'axe de rotation du pneu et centrer ainsi l'anneau sur la carcasse de pneu, et en ce que le moyen de serrage comprend plusieurs colliers de serrage (19) montés en des positions espacées circonférentiellement sur l'anneau, chacun de ces colliers de serrage (19) comprenant un bras de serrage (27) mobile entre une position dans laquelle il se situe radialement à l'intérieure des goupilles (22) pour permettre à l'anneau d'être ajusté sur un pneu et une position de serrage dans laquelle il s'étend radialement vers l'extérieur des goupilles (22) pour l'engagement avec la surface intérieure du talon du pneu, monté sur l'anneau et talon dont la surface extérieure est mise en engagement dans l'anneau, pour le serrage du talon et la jupe de l'enveloppe entre l'anneau et une partie de serrage (24) du bras de serrage, comprimant ainsi la jupe de l'enveloppe de façon étroite et continue contre le talon pour former une étanchéité annulaire vis-à-vis du passage de gaz.

2. Dispositif selon la revendication 1, dans lequel chaque bras de serrage est un bras pivotant et une saillie d'engagement de talon (24) positionnée pour coopérer avec un côté du talon opposé au côté du talon contre lequel l'anneau est engagé, et des moyens de poignée pivotante à détente rapide (28, 29) pour forcer et bloquer la saillie d'engagement du talon (24) contre le talon pour le serrer étroitement entre l'anneau et la saillie lorsque l'on fait basculer la poignée (28, 29) dans une direction.

3. Appareil selon la revendication 2, comprenant des moyens de ressort (23) pour forcer de façon élastique la saillie (24) contre le talon.

4. Dispositif selon l'une quelconque des revendications 1 à 3, dans lequel l'anneau (18) comporte une surface inclinée pour l'engagement avec le côté extérieur d'un talon de pneumatique, surface inclinée qui comprend plusieurs indentations concentriques, moyennant quoi le pneu et l'enveloppe sont forcés contre ces indentations lorsque les bras de serrage (27) sont déplacés vers les positions de serrage.

5. Dispositif selon l'une quelconque des revendications 1 à 4, dans lequel l'anneau rigide (18) comprend de plus un joint d'étanchéité annulaire élastomère (21) logé dans la surface de l'anneau dans une position de coopération avec l'enveloppe, opposée au talon.

EP 0 153 981 B1

33

10

11

17

12

17

11

18

19

22

19

19

FIG _ 1

11

16

24
23

19

21

18

11

26

27

28

29

22

2

2

18

21

22

FIG _ 2

FIG _ 3

1

FIG _ 5

32

10

32

33

31

13

14

12

11

10

11

16

16

18

18

21

19

17

FIG _ 4

2